# EUROPEAN PATENT SPECIFICATION

(11) **EP 4 020 407 B1**
(45) Date of publication and mention of the grant of the patent: **11.02.2026**
(21) Application number: 21207649.1
(22) Date of filing: 10.11.2021
(51) Int. Cl.: G06V 20/59, G06V 40/16, G06V 10/60, G06V 10/143

(54) **VEHICLE OCCUPANT MONITORING DEVICE**
FAHRZEUGINSASSENÜBERWACHUNGSVORRICHTUNG
DISPOSITIF DE SURVEILLANCE D'OCCUPANTS D'UN VÉHICULE

(30) Priority: 25.12.2020 JP 2020217265
(43) Date of publication of application: 29.06.2022
(73) Proprietor: Suzuki Motor Corporation, Hamamatsu-shi, Shizuoka 432-8611 (JP)
(72) Inventor: Shinsha, Hiromasa, Hamamatsu-shi, Shizuoka 432-8611 (JP)
(74) Representative: Henkel & Partner mbB

(56) References cited:
- WO-A2-2020/148697
- JP-A- 2020 152 133
- US-A1- 2010 254 571
- OU CHAOJIE ET AL: "Design of an End-to-End Dual Mode Driver Distraction Detection System", 3 August 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 199 - 207, ISBN: 978-3-319-10403-4, XP047516645

## Description

### [Technical Field]

The present invention relates to a vehicle occupant monitoring device.

### [Background Art]

Patent Literature 1 discloses an imaging control device for a vehicle. In the imaging control device for a vehicle, a mode selection unit selects a processing mode for monitoring an occupant using vehicle information, and a region selection unit selects a region corresponding to the selected processing mode. Then, an exposure control unit calculates an exposure condition to be set in an imaging unit using brightness information of the selected region.

Patent Literature 2 discloses a driver state determination device including: a visible light image acquisition unit configured to acquire a visible light image taken by a visible light camera that takes an image of a driver's face; a first state determination unit configured to determine a state of the driver based on the visible light image; a near infrared image acquisition unit configured to acquire a near infrared image taken by a near infrared camera that takes an image of the driver's face; a second state determination unit configured to determine a state of the driver based on the near infrared image; a vehicle traveling state determination unit configured to determine whether a vehicle is traveling or is stopped; and a power supply control unit configured to, when the vehicle is stopped, turn a power supply of the visible light camera on and turn a power supply of the near infrared camera off and configured to, when the vehicle is traveling, turn the visible light camera off and turn the near infrared camera on.

Patent Literature 3 discloses a face image pickup device and a face image pickup method which can stably acquire a face image by appropriate illumination, and a program thereof. The face image pickup device comprises a camera which picks up an image of a face of a target person, an illumination light source which illuminates the face of the target person with near-infrared light having an arbitrary light amount, and a computer. The computer detects an area including an eye from the face image of the target person picked up by the camera. The computer measures a brightness distribution in the detected area. Thereafter, the computer controls the illumination light source so as to change the amount of near-infrared light based on the measured brightness distribution.

### [Citation List]

### [Patent Literature]

[Patent Literature 1] WO 2018/158809 A1
[Patent Literature 2] JP 2020 152133 A
[Patent Literature 3] US 2010/254571 A1

### [Summary of Invention]

### [Problem to be Solved by the Invention]

When monitoring an occupant of a vehicle using an image in which the occupant is captured, use of only a near infrared light image may be insufficient to maintain robustness against ambient light. Additionally, there is a problem that even when a color image is used, since light and shade on the surface of the occupant's face continuously changes under ambient light such as sunlight and streetlamps flashing on the occupant's face during travel of the vehicle, it is difficult to recognize the face captured in the image.

In view of the foregoing, an object of the present invention is to reduce the influence of ambient light when monitoring a vehicle occupant.

### [Means for Solving the Problem]

In order to achieve the above object, there is provided a vehicle occupant monitoring device as set out in independent claim **1.** Advantageous developments are defined in the dependent claims.

### [Advantageous Effect of Invention]

According to the present invention, it is possible to reduce the influence of ambient light when monitoring a vehicle occupant.

### [Brief Description of Drawings]

[Figure 1] Figure 1 is a block diagram illustrating the configuration of an occupant monitoring system.
[Figure 2] Figure 2 is a diagram illustrating a first threshold and a second threshold of a brightness value (Y component).
[Figure 3] Figure 3 is a flowchart illustrating a flow of processing performed by the occupant monitoring device.
[Figure 4] Figure 4 is a flowchart illustrating a flow of first determination processing.
[Figure 5] Figure 5 is a flowchart illustrating a flow of second determination processing.
[Figure 6] Figure 6 is a diagram illustrating a region in which an occupant's face is captured.
[Figure 7] Figure 7 is a diagram illustrating a state in which a region in which an occupant's face is captured is divided into a plurality of subregions.
[Figure 8] Figure 8 is another diagram illustrating a region in which an occupant's face is captured.
[Figure 9] Figure 9 is another diagram illustrating a state in which a region in which an occupant's face is captured is divided into a plurality of subregions.

### [Mode for Carrying Out the Invention]

Hereinafter, the present invention will be described on the basis of an embodiment illustrated in the drawings. Note, however, that the present invention is not limited to the embodiment described below.

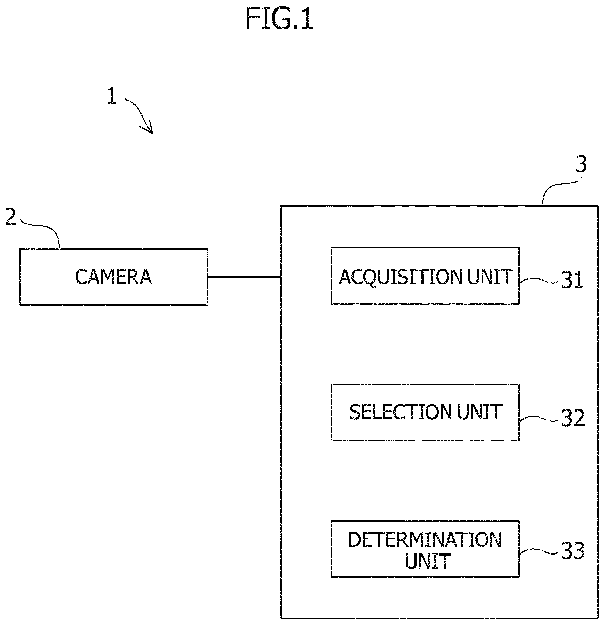

Figure 1 illustrates an occupant monitoring system 1 installed in a vehicle. The occupant monitoring system is also referred to as a driver monitoring system (DMS). The occupant monitoring system 1 includes a camera 2 connected so as to be capable of communication, and an occupant monitoring device 3. The camera 2 is installed near a driver's seat of the vehicle, and captures an image of the occupant of the vehicle. The occupant monitoring device 3 acquires the image obtained by the camera 2, and it monitors the occupant on the basis of the image. The occupant monitoring device 3 includes an acquisition unit 31, a selection unit 32, and a determination unit 33. The processing performed by each unit will be described later. The occupant monitoring device 3 is implemented by computer hardware, and includes a processor, a storage device, and an interface for external communication.

The occupant monitoring system 1 monitors the occupant using a near infrared image and a color image. One of a near infrared image and an image in YUV format (YUV image) is selected according to the brightness value of the image, and the selected image is used to monitor the occupant. Note that when the color image captured by the camera 2 is an image of RGB format (RGB image), the RGB image can be converted into a YUV image according to the ITU-R BT.601 standard defined by the International Telecommunication Union (ITU).

Incidentally, in a near infrared image, sometimes it cannot be determined whether a color is gray or red from the pixel value.

Hence, as long as the brightness value of the region where the occupant's face appears (brightness on occupant's face) is within an appropriate range for recognizing the occupant's face without problem, a near infrared image is used. On the other hand, when the brightness value is out of the predetermined range, that is, when it is considered that the brightness value will have an adverse effect on recognition of the occupant's face, a YUV image is used. In the YUV image, the color component value and the brightness value are separated, and the brightness component has little effect on the value of the color component. For this reason, feature points of the occupant's face can be recognized properly even when the brightness value is out of the predetermined range.

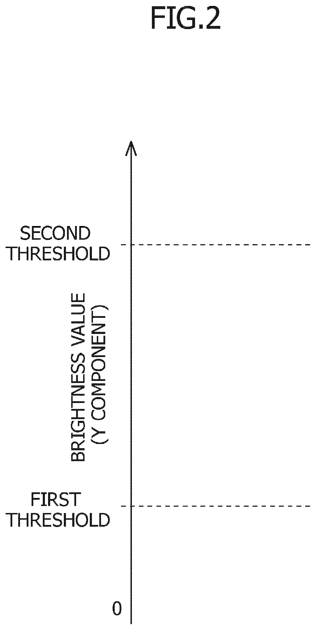

Figure 2 illustrates a first threshold and a second threshold of the brightness value (Y component) in the YUV image. Both the first threshold and the second threshold are positive values, and the first threshold is less than the second threshold. When the brightness value is equal to or greater than the first threshold and equal to or less than the second threshold, it is considered that the brightness value is within the appropriate range and the near infrared image is used. When the brightness value falls below the first threshold or exceeds the second threshold, it is considered that the brightness value is out of the appropriate range and the YUV image is used.

For example, the first threshold may be a value corresponding to 20% to 30% of the system upper limit of the brightness value, and the second threshold may be a value corresponding to 80% of the above system upper limit. The first threshold and the second threshold can be stored in the storage device in the occupant monitoring device 3.

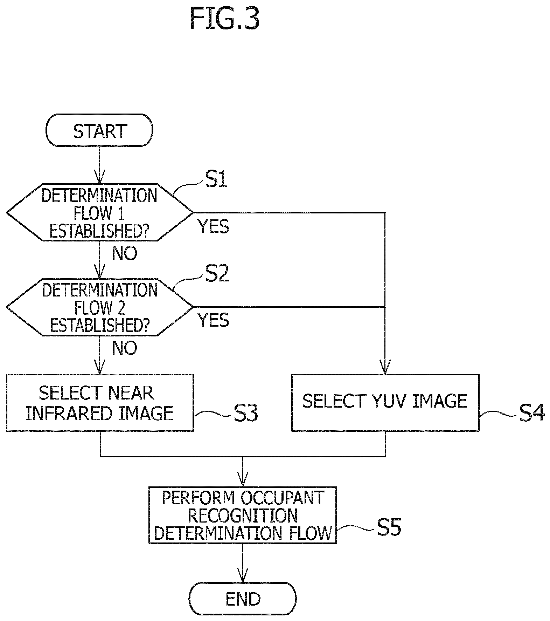

Figure 3 illustrates the flow of processing performed by the occupant monitoring device 3. The present processing is performed periodically during travel of the vehicle. In step S1, the acquisition unit 31 acquires a near infrared image and a color image obtained by the camera 2. The color image is an RGB image or a YUV image. Furthermore, in the same step, the selection unit 32 determines whether a first determination flow has been established. The first determination flow will be described later. If it is determined that the first determination flow has not been established, step S2 is performed next, and if it is determined that the first determination flow has been established, step S4 is performed next.

In step S2, the selection unit 32 determines whether a second determination flow has been established. Details of the second determination flow will be described later. If it is determined that the second determination flow has not been established, step S3 is performed next, and if it is determined that the second determination flow has been established, step S4 is performed next.

In step S3, the selection unit 32 selects the near infrared image as the image used for occupant monitoring. In step S4, the selection unit 32 selects the image of YUV format as the image used for occupant monitoring. In step S5, the determination unit 33 determines the state of the occupant using the image selected in step S3 or step S4.

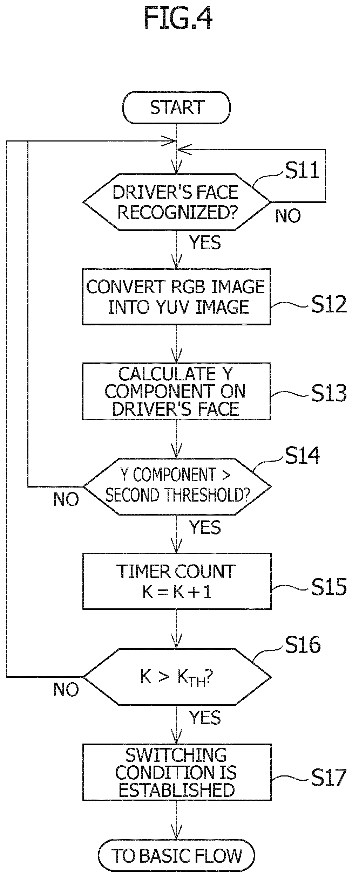

Figure 4 illustrates details of the first determination flow of step S1. In step S11, the selection unit 32 attempts to recognize the occupant's face captured in the near infrared image or the color image obtained by the camera 2, and determines whether or not the recognition has been successful. If it is determined that the recognition has been successful, step S12 is performed next, and if not, step S11 is performed again.

In step S12, if the color image obtained by the camera 2 is an RGB image, the selection unit 32 converts the RGB image into a YUV image. As a result, the Y value, that is, the brightness value, is obtained. Note that if the color image obtained by the camera 2 is a YUV image, the present step need not be performed.

In step S13, the selection unit 32 calculates the mean value of the Y component of the pixels included in the face region of the YUV image corresponding to the occupant's face region recognized in the near infrared image. In this way, it is possible to determine the whiteout state of the image obtained by the camera 2. Additionally, it is possible to recognize and determine the occupant's face properly. Note that in order to prevent recognition failure due to excessive brightness in certain parts, the face region may be divided into a plurality of regions and the mean value of the Y component may be calculated for each region.

In step S14, the selection unit 32 determines whether the mean value of the Y component calculated in step S13 exceeds the second threshold. Then, if the determination result is "Yes", it is considered that the brightness is high and determination using the near infrared image is inappropriate, and therefore step S15 is performed next. If not, step S11 is performed again.

In step S15, the selection unit 32 substitutes a value obtained by adding one to a timer variable K into the timer variable K. The timer variable is a variable for determining whether the mean value of the Y component in the occupant's face region exceeds the second threshold continuously over a plurality of frames. The initial value of the timer variable K is zero. When a predetermined time elapses after the update of the timer variable K, the timer variable K is reset to zero.

In step S16, the selection unit 32 determines whether the timer variable K exceeds a predetermined timer variable threshold K_{TH}. If the determination result is "Yes," step S17 is performed, and if not, step S11 is performed again.

For example, the timer variable threshold K_{TH} can be set to two. Using a frame counter, if the visibility is unstable for three frames or more (i.e., if determination result of step S14 is "Yes" for three frames or more), the determination result of step S16 is "Yes," and step S17 is performed. Accordingly, even if there are some frames determined "Yes" in step S14, as long as the determination result in step S16 is "No," the near infrared image is used instead of the YUV image to determine the occupant. Note that the value of the timer variable K_{TH} may be varied.

In step S17, the selection unit 32 determines that the condition for switching from the near infrared image to the YUV image has been established. That is, the selection unit 32 sets a flag regarding use of the YUV image. Note that a predetermined validity period may be set for the flag, and the flag may be eliminated when the predetermined validity period expires after setting the flag. With this configuration, since the YUV image is used only at a necessary timing, accuracy of recognizing the occupant's face can be maintained.

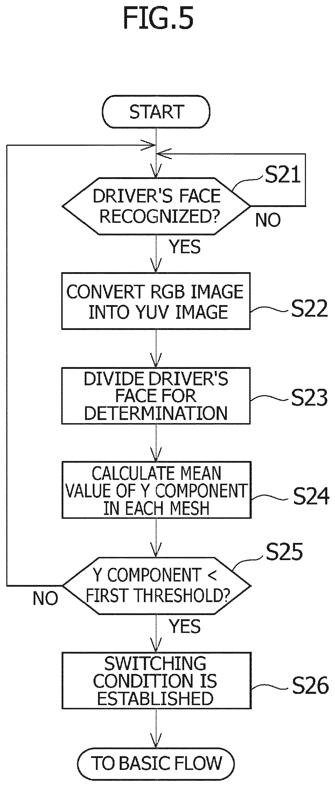

Figure 5 illustrates details of the second determination flow in step S2. In step S21, the selection unit 32 attempts to recognize the occupant's face captured in the near infrared image or the color image obtained by the camera 2, and determines whether the recognition has been successful. If it is determined that the recognition has been successful, step S22 is performed next, and if not, step S21 is performed again.

In step S22, if the color image obtained by the camera 2 is an RGB image, the selection unit 32 converts the RGB image into a YUV image. As a result, the Y value, that is, the brightness value is obtained. Note that if the color image obtained by the camera 2 is a YUV image, the present step need not be performed.

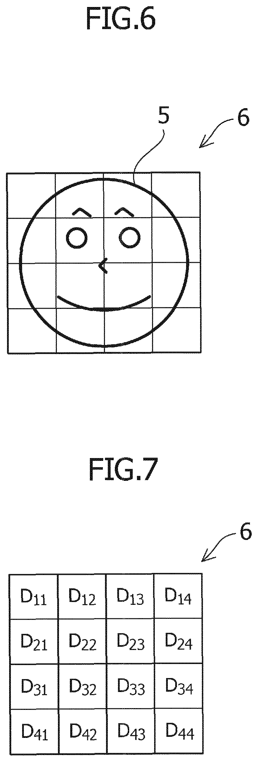

In step S23, the selection unit 32 divides the region of the YUV image corresponding to the face region recognized in the near infrared image into a plurality of subregions. For example, based on the area of a rectangular region including the region in which the face is captured, as illustrated in Figures 6 and 7, for example, a region 6 in which an occupant's face 5 is captured can be divided into a total of 16 subregions including four in the horizontal direction and four in the vertical direction. In this case, 16 subregions D₁₁ to D₁₄; D₂₁ to D₂₄; D₃₁ to D₃₄; and D₄₁ to D₄₄ can be obtained.

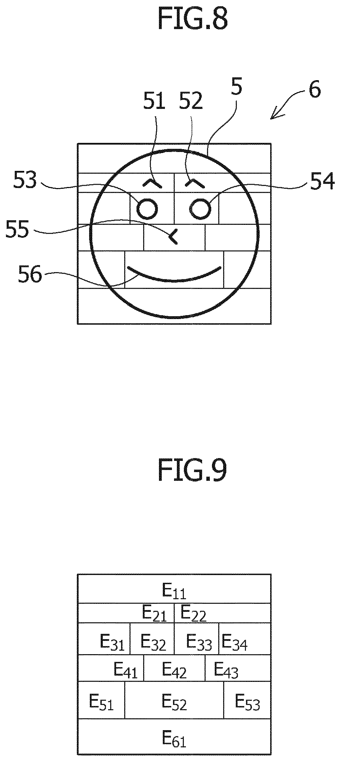

Alternatively, parts of the occupant's face 5 including a right eyebrow 51, a left eyebrow 52, a right eye 53, a left eye 54, a nose 55, and lips 56 may be recognized, and the region 6 may be divided into a plurality of subregions such that each part is included in a single subregion (such that each part does not straddle a plurality of subregions). Figures 8 and 9 illustrate a state in which the region 6 is divided into 14 subregions E₁₁; E₂₁; E₂₂; E₃₁ to E₃₄; E₄₁ to E₄₃; E₅₁ to E₅₃; and E₆₁.

The subregion E₁₁ includes a part above the occupant's right eyebrow 51 and left eyebrow 52.

The subregion E₂₁ includes the right eyebrow 51, and the subregion E₂₂ includes the left eyebrow 52.

The subregion E₃₁ includes a part on the right side of the right eye 53 as viewed from the occupant, and the subregion E₃₂ includes the right eye 53. Additionally, the subregion E₃₃ includes the left eye 54, and the subregion E₃₄ includes a part on the left side of the left eye 54 as viewed from the occupant.

The subregion E₄₁ includes a part on the right side of the nose 55 as viewed from the occupant, the subregion E₄₂ includes the nose 55, and the subregion E₄₃ includes a part on the left side of the nose 55 as viewed from the occupant.

The subregion E₅₁ includes a part on the right side of the lips 56 as viewed from the occupant, the subregion E₅₂ includes the lips 56, and the subregion E₅₃ includes a part on the left side of the lips 56 as viewed from the occupant.

The subregion E₆₁ includes a part below the lips 56.

When the region is divided as illustrated in Figures 8 and 9, subregions are formed corresponding to specific parts of the face. Hence, brightness can be determined more easily than in the case of dividing the region as illustrated in Figures 6 and 7. For example, in the case in which the lips straddle a plurality of subregions as illustrated in Figure 6, the calculation load for determining whether or not recognition of the occupant's face is affected may increase, but by dividing the region in the manner as illustrated in Figures 8 and 9, such a situation can be avoided.

As described above, in step S23, the region of the YUV image corresponding to the face region recognized in the near infrared image is divided into a plurality of subregions.

In step S24, the selection unit 32 calculates the mean value of the Y component for each subregion obtained in step S23.

In step S25, the selection unit 32 determines whether the mean value of the Y component calculated for each subregion in step S24 falls below the first threshold.

Of the plurality of mean values corresponding to the plurality of subregions, if n mean values fall below the first threshold, the determination result is "Yes." Note, however, that n is a natural number and is determined in advance.

Alternatively, if the mean value of the Y component of a subregion including parts such as eyes and mouth that are important in occupant monitoring (subregions E₃₂, E₃₃, and E₅₂ in example of Figure 9) fall below the first threshold, the determination result of step S25 can be "Yes," regardless of the mean values of the Y component of other subregions.

If the determination result of the present step is "Yes," it is considered that the brightness is low and determination using the near infrared image is inappropriate, and therefore step S26 is performed next. If not, step S21 is performed again.

In step S26, the selection unit 32 determines that the condition for switching from the near infrared image to the YUV image has been established. That is, the selection unit 32 sets a flag regarding use of the YUV image. Note that a predetermined validity period may be set for the flag, and the flag may be eliminated when the predetermined validity period expires after setting the flag. With this configuration, since the YUV image is used only at a necessary timing, accuracy of recognizing the occupant's face can be maintained.

According to the embodiment described above, since the color image is used, occupant monitoring using color such as biometric identification can be performed. In addition, since the near infrared image or the YUV image is selected depending on the brightness value, adverse effect on monitoring by ambient light can be reduced.

New applications using color can also be made available. It is also possible to change the temperature settings of an air conditioner by diagnosing the state of the occupants, that is, to determine hot or cold from facial complexion, for example.

The invention is also advantageous in terms of cost, since it is only necessary to provide a sensor with color filters to add color imaging ability to the camera, and a dual-pass filter (filter that allows passage of visible light rays and near infrared light and near infrared rays) to the configuration of a conventional driver monitoring system (camera, LED and ECU). Since there is no need to add a color camera as another component, cost can be reduced while increasing the variety of applications.

If a separate ISP (image signal processor) is required for color processing, it may be added to the camera 2 or the occupant monitoring device 3.

By using a monocular camera (RGBC (or RGBW) Bayer arrangement) and a dual-pass filter, both color images and conventional near infrared images can be acquired. Then, internal image processing can be performed by the ISP to form a camera capable of alternately outputting color images and near infrared images (e.g., color images in even number frames and near infrared images in odd number frames).

As processing of near infrared images, processing known in prior art such as detection of distracted driving, drowsy driving, and the like can be performed.

As processing of color images, determination of accessories such as a mask (processing can be switched to near infrared image processing method if there is accessory), determination of the facial complexion (determined from difference from start of driving), can be performed to detect sudden illness as quickly as possible.

Next, a method of determining a part or accessory using color will be described. Specifically, the processing is performed by separating only the "red component" to use it for determination on the mouth and facial complexion, whereby erroneous detection and failure in detecting can be reduced.

### i) Method of recognizing the mouth by color

(1) Input a color image
(2) Convert the RGB image into a YUV (YCbCr) image
(3) Pick up only the V component (red component) by a determination unit and perform Sobel filter processing.
(4) Perform "lip" pattern recognition with only the edge of the red component left.
(5) When "lip" is recognized, determine the degree of opening of the mouth to determine the drowsiness depending on the degree of opening of the mouth.

### ii) Method of determining the facial complexion (sudden illness or the like) using color

(1) Input a color image
(2) Convert the RGB image into a YUV (YCbCr) image
(3) Pick up only the U component (blue component) by a determination unit and perform Sobel filter processing.
(4) Pick up only the V component (red component) and perform Sobel filter processing.
(5) Perform "lip" pattern recognition with only the edge of the red component left.
(6) After it is determined that the occupant is facing forward in (5) above, compare the region with only the edge of the blue component left and the region with only the edge of the red component left and measure the change amount (specifically, compare area of region surrounded by edge obtained by Sobel filter processing for each component).
(7) If there is a sudden increase in the blue component or the red component in the measurement result, the occupant may have suddenly become ill. Hence, a warning is given to the occupant to check whether there is a health problem.
(8) If the occupant does not show any reaction to the warning, such as pushing a switch, send a report to police or to another system.

Sobel filter is a filter for extracting edges. As the Sobel filer, horizontal and vertical Sobel filters are combined to emphasize the edge in all directions.

When determining the facial complexion, pieces of the U component (blue component) and V component (red component) data during vehicle travel are accumulated over a predetermined time, and the mean value of each component can be used. The predetermined time may be about 10 minutes to 30 minutes, for example, or may be variable. The mean value of each component is used when calculating the "area of the region surrounded by the edge obtained by Sobel filter processing" in (6) above. By using such a time average, it is possible to calculate the "area of the region surrounded by the edge" properly even in a vehicle in which brightness changes over a short time period due to ambient light and the like.

Note that step S1 may be omitted in Figure 3. That is, one of the near infrared image and the YUV image can be selected by performing the second determination flow (Figure 5) using the first threshold, without performing the first determination flow (Figure 4) using the second threshold.

Regarding the embodiment described above, the following additional features are disclosed.

### [Additional Feature 1]

An occupant monitoring device including:
an acquisition unit that acquires a near infrared image and a color image in which a vehicle occupant is captured, the color image being an RGB image or a YUV image;
a selection unit that, when the color image is an RGB image, converts the RGB image into a YUV image and selects one of the near infrared image and the YUV image; and
a determination unit that determines a state of the occupant using the near infrared image or the YUV image selected by the selection unit, in which
the selection unit
divides a region in which the occupant's face is captured in the YUV image into a plurality of subregions, and calculates a mean value of brightness values of pixels included in each of the subregions,
selects the near infrared image when the mean value is equal to or greater than a predetermined threshold, and
selects the YUV image when the mean value falls below the threshold.

### [Effect]

With this configuration, it is possible to determine feature points of the face reliably regardless of the brightness on the surface of the face. That is, even when the pillar of the vehicle casts shade due to afternoon sun or sunlight or the orientation of the shadow is not constant due to vehicle behavior, it is possible to reliably switch to the YUV image in which the brightness value is separated. Hence, it is possible to recognize the occupant's face. Specific examples include a case in which the brightness of the face is partially different or is shaded due to the headlights of an oncoming vehicle or the headlights of a vehicle from the rear side. Alternatively, there is also a case in which a part of the face is shaded by streetlamps or by store lighting flashing thereonto.

Note that YUV refers to YCbCr. The YUV format may be any of YUV4:4:4, YUV4:2:2, or YUV4:1:1 (difference in number of bits, difference in compression rate).

### [Additional Feature 2]

The occupant monitoring device according to Additional Feature 1, in which
the subregion is provided for each part of the occupant's face.

### [Effect]

As compared to equal division in which the area of regions become equal after division, it is possible to determine the brightness more easily by forming the subregions so as to correspond more closely to the facial parts. Specifically, in the case of equal division, parts such as the lips may straddle a plurality of subregions and the calculation load for determining whether or not recognition of the occupant's face is affected may increase. Furthermore, since each subregion can be easily weighted on the basis of presence or absence of a part, the occupant's face can be recognized properly.

Additionally, as compared to equal division, weighting and determination can be performed more easily for each part. In the case of equal division, a plurality of facial parts may be included in one subregion. While it is conceivable in the case of equal division to increase the number of subregions to avoid including a plurality of facial parts or increase accuracy, there is a possibility that the increase in number may increase the calculation load on the system.

### [Additional Feature 3]

The occupant monitoring device according to any one of Additional Features 1 and 2, in which
the determination unit performs Sobel filter processing for extracting an edge portion on a V component obtained from the YUV image, and recognizes a feature point regarding the lips of the occupant.

### [Effect]

It is possible to recognize the feature points of the lips even when the brightness is unstable.

### [Additional Feature 4]

The occupant monitoring device according to any one of Additional Feature 1 and 2, in which
the determination unit performs Sobel filter processing for extracting an edge portion on a U component and a V component obtained from the YUV image, compares the area of the U component on the occupant's face and the area of the V component on the occupant's face, and determines the physical condition of the occupant.

### [Effect]

It is possible to recognize the state of the occupant even when the brightness is unstable.

While the embodiment of the present invention has been described above, the present invention is not limited to the embodiment, and various modifications and changes can be made on the basis of the technical concept of the present invention.

### [Reference Signs List]

- 1: occupant monitoring system
- 2: camera
- 3: occupant monitoring device
- 31: acquisition unit
- 32: selection unit
- 33: determination unit

## Claims

1. A vehicle occupant monitoring device (3) comprising:
an acquisition unit (31) that acquires a near infrared image and a color image in which a vehicle occupant is captured, the color image being an RGB image or a YUV image;
a selection unit (32) that, when the color image is an RGB image, converts the RGB image into a YUV image and selects one of the near infrared image and the YUV image; and
a determination unit (33) that determines a state of the occupant using the near infrared image or the YUV image selected by the selection unit (32), wherein the selection unit (32):
divides (S23) a region in which the occupant's face is captured in the YUV image into a plurality of subregions (D₁₁-D₁₄, D₂₁-D₂₄, D₃₁-D₃₄, D₄₁-D₄₄), and calculates (S24), for each subregion, a mean value of brightness values of pixels included in the subregion,
selects the near infrared image when n mean values out of the calculated mean values are equal to or greater than a predetermined threshold (S3), n being a natural number and being determined in advance, and
selects the YUV image when the n mean values fall below the threshold (S4).

2. The vehicle occupant monitoring device (3) according to claim 1, wherein
the subregion (E₁₁, E₂₁, E₂₂, E₃₁-E₃₄, E₄₁-E₄₃, E₅₁-E₅₃, E₆₁) is provided for each part (51-56) of the occupant's face.

3. The vehicle occupant monitoring device (3) according to claim 1 or 2, wherein
the determination unit (33) performs Sobel filter processing for extracting an edge portion on a V component obtained from the YUV image, and recognizes a feature point regarding the lips (56) of the occupant.

4. The vehicle occupant monitoring device (3) according to claim 1 or 2, wherein
the determination unit (33) performs Sobel filter processing for extracting an edge portion on a U component and a V component obtained from the YUV image, compares the area of the U component on the occupant's face (5) and the area of the V component on the occupant's face, and determines the physical condition of the occupant.

## Patentansprüche

1. Eine Fahrzeuginsassen-Überwachungsvorrichtung (3), umfassend:
eine Erfassungseinheit (31), die ein Nahinfrarotbild und ein Farbbild, in dem ein Fahrzeuginsasse erfasst ist, erfasst, wobei das Farbbild ein RGB-Bild oder ein YUV-Bild ist;
eine Auswahleinheit (32), die, wenn das Farbbild ein RGB-Bild ist, das RGB-Bild in ein YUV-Bild umwandelt und eines von dem Nahinfrarotbild und dem YUV-Bild auswählt; und
eine Bestimmungseinheit (33), die unter Verwendung des von der Auswahleinheit (32) ausgewählten Nahinfrarotbildes oder YUV-Bildes einen Zustand des Insassen bestimmt, wobei die Auswahleinheit (32):
einen Bereich, in dem das Gesicht des Insassen im YUV-Bild erfasst ist, in eine Vielzahl von Teilbereichen (D11-D14, D21-D24, D31-D34, D41-D44) unterteilt (S23) und für jeden Teilbereich einen Mittelwert von Helligkeitswerten von in dem Teilbereich enthaltenen Pixeln berechnet (S24),
das Nahinfrarotbild auswählt, wenn n Mittelwerte aus den berechneten Mittelwerten gleich oder größer als ein vorbestimmter Schwellenwert (S3) sind, wobei n eine natürliche Zahl ist und im Voraus bestimmt wird, und
das YUV-Bild auswählt, wenn die n Mittelwerte unter den Schwellenwert (S4) fallen.

2. Die Fahrzeuginsassen-Überwachungsvorrichtung (3) nach Anspruch 1, wobei
der Teilbereich (E11, E21, E22, E31-E34, E41-E43, E51-E53, E61) für jeden Teil (51-56) des Gesichts des Insassen vorgesehen ist.

3. Die Fahrzeuginsassen-Überwachungsvorrichtung (3) nach Anspruch 1 oder 2, wobei
die Bestimmungseinheit (33) eine Sobel-Filterverarbeitung zum Extrahieren eines Kantenabschnitts an einer aus dem YUV-Bild erhaltenen V-Komponente durchführt und einen Merkmals-Punkt bezüglich der Lippen (56) des Insassen erkennt.

4. Die Fahrzeuginsassen-Überwachungsvorrichtung (3) nach Anspruch 1 oder 2, wobei
die Bestimmungseinheit (33) eine Sobel-Filterverarbeitung zum Extrahieren eines Kantenabschnitts an einer aus dem YUV-Bild erhaltenen U-Komponente und einer V-Komponente durchführt, die Fläche der U-Komponente auf dem Gesicht des Insassen (5) und die Fläche der V-Komponente auf dem Gesicht des Insassen vergleicht und den körperlichen Zustand des Insassen bestimmt.

## Revendications

1. Un dispositif de surveillance d'occupant de véhicule (3) comprenant :
une unité d'acquisition (31) qui acquiert une image en proche infrarouge et une image en couleurs dans laquelle un occupant de véhicule est capturé, l'image en couleurs étant une image RGB ou une image YUV ;
une unité de sélection (32) qui, lorsque l'image en couleurs est une image RGB, convertit l'image RGB en une image YUV et sélectionne l'une parmi l'image en proche infrarouge et l'image YUV ; et
une unité de détermination (33) qui détermine un état de l'occupant en utilisant l'image en proche infrarouge ou l'image YUV sélectionnée par l'unité de sélection (32), dans lequel l'unité de sélection (32) :
divise (S23) une région dans laquelle le visage de l'occupant est capturé dans l'image YUV en une pluralité de sous-régions (D11-D14, D21-D24, D31-D34, D41-D44), et calcule (S24), pour chaque sous-région, une valeur moyenne de valeurs de luminosité de pixels inclus dans la sous-région,
sélectionne l'image en proche infrarouge lorsque n valeurs moyennes parmi les valeurs moyennes calculées sont égales ou supérieures à un seuil prédéterminé (S3), n étant un nombre entier naturel et étant déterminé à l'avance, et
sélectionne l'image YUV lorsque les n valeurs moyennes sont inférieures au seuil (S4).

2. Le dispositif de surveillance d'occupant de véhicule (3) selon la revendication 1, dans lequel
la sous-région (E11, E21, E22, E31-E34, E41-E43, E51-E53, E61) est prévue pour chaque partie (51-56) du visage de l'occupant.

3. Le dispositif de surveillance d'occupant de véhicule (3) selon la revendication 1 ou 2, dans lequel
l'unité de détermination (33) effectue un traitement par filtre de Sobel pour extraire une partie de contour sur une composante V obtenue à partir de l'image YUV, et reconnaît un point caractéristique concernant les lèvres (56) de l'occupant.

4. Le dispositif de surveillance d'occupant de véhicule (3) selon la revendication 1 ou 2, dans lequel
l'unité de détermination (33) effectue un traitement par filtre de Sobel pour extraire une partie de contour sur une composante U et une composante V obtenues à partir de l'image YUV, compare la surface de la composante U sur le visage de l'occupant (5) et la surface de la composante V sur le visage de l'occupant, et détermine la condition physique de l'occupant.
